# EUROPEAN PATENT APPLICATION

(11) **EP 4 734 216 A1**
(43) Date of publication of application: **29.04.2026**
(21) Application number: 24835086.0
(22) Date of filing: 27.03.2024
(51) Int. Cl.: H01M 10/058, H01M 10/052

(54) **WINDING NEEDLE, WINDING APPARATUS, BATTERY MANUFACTURING APPARATUS, AND WINDING METHOD**

(30) Priority: 03.07.2023 CN 202310807055
(71) Applicant: Contemporary Amperex Technology Co., Limited, Ningde, Fujian 352100 (CN)
(72) Inventor: AI, Yuquan, Ningde, Fujian 352100 (CN); WEI, Chuanyu, Ningde, Fujian 352100 (CN)
(74) Representative: Gong, Jinping
(86) International application number: PCT/CN2024/084027
(87) International publication number: WO 2025/007599

(57) **Abstract**

The embodiments of this application provide a winding pin, a winding apparatus, a battery manufacturing device, and a winding method. The winding apparatus includes a winding pin, a pair of first clamp pins, and at least one second clamp pin. The pair of first clamp pins are configured to move away from each other after the winding pin is withdrawn from an electrode assembly to stretch the electrode assembly, and the second clamp pin is configured to support an upper half portion of the electrode assembly in a process of stretching the electrode assembly by the pair of first clamp pins. The winding pin includes a winding pin body, an outer peripheral surface of the winding pin body is provided with a pair of first grooves, the first groove is configured to accommodate the first clamp pin, the pair of first grooves are spaced apart along a circumferential direction of the winding pin body, and the outer peripheral surface of the winding pin body is further provided with at least one second groove, the second groove is configured to accommodate the second clamp pin, and the second groove is spaced apart from the first grooves along the circumferential direction of the winding pin body. The technical solutions provided in this application can improve the reliability of the battery.

## Description

### CROSS-REFERENCE TO RELATED APPLICATIONS

This application claims priority to Chinese Patent Application No. 202310807055.2, filed on July 3, 2023, entitled "WINDING PIN, WINDING APPARATUS, BATTERY MANUFACTURING DEVICE, AND WINDING METHOD," the entire contents of which are incorporated herein by reference.

### TECHNICAL FIELD

This application relates to the field of battery production technologies, and more particularly, to a winding pin, a winding apparatus, a battery manufacturing device, and a winding method.

### BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

In the development of battery technologies, how the reliability of batteries is improved is an urgent technical problem that needs to be solved in battery technologies.

### SUMMARY

This application provides a winding pin, a winding apparatus, a battery manufacturing device, and a winding method, which can improve the reliability of the battery.

This application is achieved through the following technical solutions:
According to a first aspect, this application provides a winding pin including a winding pin body, where an outer peripheral surface of the winding pin body is provided with a pair of first grooves, the first groove is configured to accommodate a first clamp pin, and the pair of first grooves are spaced apart along a circumferential direction of the winding pin body; and the outer peripheral surface of the winding pin body is further provided with at least one second groove, the second groove is configured to accommodate a second clamp pin, and the second groove is spaced apart from the first grooves along the circumferential direction of the winding pin body.

The technical solution of the embodiments of this application provides a pair of circumferentially spaced first grooves and a second groove distinct from the first grooves on the outer peripheral surface of the winding pin body. During use, the pair of first grooves are disposed on two sides in a vertical direction, and the second groove is disposed above a line connecting the pair of first grooves. An electrode assembly is wound and formed on the outer peripheral surface of the winding pin body, the first grooves accommodate the first clamp pins, and the second groove accommodates the second clamp pin, thereby determining positions of the first clamp pins and the second clamp pin. In a subsequent stretching process of the electrode assembly, the second clamp pin, whose position is determined by the second groove, abuts against an upper half portion of the electrode assembly. This reduces a descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of a battery cell, and thus improving the reliability of a battery.

In some embodiments, the pair of first grooves are spaced apart by 180° along the circumferential direction of the winding pin body.

The technical solution of the embodiments of this application arranges the pair of first grooves 180° apart on the outer peripheral surface of the winding pin body, where the electrode assembly is wound and formed on the outer peripheral surface of the winding pin body, and the pair of first grooves are disposed on two sides in the vertical direction, meaning that the pair of first grooves are located on a diameter of the electrode assembly in a horizontal direction. The first groove is configured to accommodate the first clamp pin. In the subsequent stretching process of the electrode assembly, the first clamp pins move away from each other along the horizontal direction, enabling the best stretching effect for the electrode assembly and facilitating the arrangement of the second groove, thereby improving the convenience.

In some embodiments, in the circumferential direction of the winding pin body, an angle between the second groove and one of the first grooves is denoted as α, meeting 45° ≤ α ≤ 90°.

The technical solution of the embodiments of this application provides that the angle between the second groove and one of the first grooves is α. During use, the pair of first grooves are horizontally disposed, and the second groove is disposed above the first grooves. The first groove is configured to accommodate the first clamp pin, and the second groove is configured to accommodate the second clamp pin. The magnitude of α corresponds to the position of the second clamp pin relative to the wound electrode assembly. When 45° ≤ α ≤ 90°, the first clamp pins and the second clamp pin are relatively far apart, meaning that the second clamp pin is at a higher position in the vertical direction. The portion where the second clamp pin abuts against the upper half portion is relatively close to the uppermost end of the electrode assembly, with a relatively small angular deviation from the uppermost end of the electrode assembly. The second clamp pin abuts against the upper half portion of the electrode assembly. This reduces the descending speed of the upper half portion of the electrode assembly, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery.

In some embodiments, 60° ≤ α ≤ 90°.

The technical solution of the embodiments of this application provides that when 60° ≤ α ≤ 90°, to be specific, the first clamp pins and the second clamp pin are farther apart, the second clamp pin is relatively close to the uppermost end of the electrode assembly, with a relatively small angular deviation from the uppermost end of the electrode assembly. The second clamp pin abuts against the upper half portion of the electrode assembly. This reduces the descending speed of the upper half portion of the electrode assembly, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery.

In some embodiments, 85° ≤ α ≤ 90°.

The technical solution of the embodiments of this application provides that when 85° ≤ α ≤ 90°, the second clamp pin abuts against the uppermost end of the electrode assembly, and deviates from the uppermost end of the electrode assembly due to positioning errors or process reasons. The second clamp pin abuts against the upper half portion of the electrode assembly. This reduces the descending speed of the upper half portion of the electrode assembly, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery.

In some embodiments, the outer peripheral surface of the winding pin body is divided by the pair of first grooves into a first region and a second region, the second groove is provided in plurality, and the plurality of second grooves are all disposed in the first region.

The technical solution of the embodiments of this application provides that, due to gravity, only the upper half portion of the electrode assembly collapses due to excessive descent of the upper half portion, leading to wrinkling of electrode plates or tabs in the upper half portion, meaning that only the upper half portion of the electrode assembly requires abutting support. The outer peripheral surface of the winding pin body is divided by the pair of first grooves into the first region and the second region, and the plurality of second grooves are all disposed in the first region. During use, the pair of first grooves are disposed in the horizontal direction, and the second grooves in the first region are disposed above the pair of first grooves. The second groove is configured to accommodate the second clamp pin, and abuts against the upper half portion of the electrode assembly through the second clamp pin. This reduces the descending speed of the upper half portion of the electrode assembly, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery. By disposing the second grooves in the first region and disposing the first region above the first grooves during use, the probability of disposing the second clamp pins below the first grooves is reduced, while also saving costs and improving installation convenience.

In some embodiments, the pair of first grooves are symmetrically disposed with respect to a first plane, a central axis of the winding pin body lies on the first plane, the second groove is provided in plurality, and the plurality of second grooves are symmetrically disposed with respect to the first plane.

The technical solution of the embodiments of this application provides that the plurality of second grooves are symmetrically disposed with respect to the first plane, and the central axis of the winding pin body lies on the first plane. During use, the pair of first grooves are disposed in the horizontal direction, and the electrode assembly is wound and formed on the outer peripheral surface of the winding pin body. The second grooves are symmetrically disposed with respect to a diameter of the electrode assembly in the vertical direction, and the second clamp pins are accommodated in the second grooves, respectively, such that the plurality of second clamp pins respectively abut against portions of the electrode assembly on two sides of the diameter in the vertical direction. This makes the abutting effect of the second clamp pins on the two sides of the diameter of the electrode assembly in the vertical direction symmetrical, reducing the descending speed of the upper half portion of the electrode assembly, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery.

In some embodiments, the first grooves and the second groove both penetrate the winding pin body along an axial direction of the winding pin body.

The technical solution of the embodiments of this application provides that the first grooves and the second groove extend along the axial direction of the winding pin body and penetrate the winding pin body. The first groove is configured to accommodate the first clamp pin, and the second groove is configured to accommodate the second clamp pin, improving the convenience of installing the first clamp pins and the second clamp pin. By determining the positions of the first grooves and the second groove, the positions of the first clamp pins and the second clamp pin are determined, improving the accuracy of the installation positions of the first clamp pins and the second clamp pin, while also facilitating the withdrawal of the winding pin, reducing the risk of interference between the winding pin and the first clamp pins and the second clamp pin during withdrawal.

In some embodiments, the winding pin body includes a first winding pin portion and a second winding pin portion, a gap is defined between the first winding pin portion and the second winding pin portion, the second groove and one of the first grooves are disposed on an outer peripheral surface of the first winding pin portion, and the other first groove is disposed on an outer peripheral surface of the second winding pin portion.

The technical solution of the embodiments of this application provides that the winding pin body includes the first winding pin portion and the second winding pin portion, with a gap defined between the first winding pin portion and the second winding pin portion. One of the first grooves is disposed on the first winding pin portion, and the other first groove is disposed on the second winding pin portion. During use of the winding pin, a size of the gap can be adjusted by moving the first winding pin portion and the second winding pin portion, to adjust the relative positions of the first winding pin portion and the second winding pin portion, implementing the fine-tuning in disposing the pair of first grooves. The first grooves accommodate the first clamp pins, improving the accuracy of the installation positions of the first clamp pins, thereby enhancing the stretching effect of the electrode assembly, improving the reliability of the electrode assembly, and thus improving the reliability of the battery cell and the battery.

According to a second aspect, this application further provides a winding apparatus for winding and forming an electrode assembly, including the winding pin according to any one the embodiments of the first aspect, a pair of first clamp pins, and at least one second clamp pin. The pair of first clamp pins are configured to move away from each other after the winding pin is withdrawn from the electrode assembly to stretch the electrode assembly, and the second clamp pin is configured to support an upper half portion of the electrode assembly in a process of stretching the electrode assembly by the pair of first clamp pins.

The technical solution of the embodiments of this application provides that the first clamp pins are disposed in the first grooves, respectively, and the second clamp pin is disposed in the second groove. After the winding pin winds and forms the electrode assembly and is withdrawn, the two first clamp pins move away from each other in a horizontal direction, and then abut against two opposing inner walls of the electrode assembly in the horizontal direction to stretch the electrode assembly along the horizontal direction. At this time, the two opposing inner walls of the electrode assembly in the vertical direction approach each other, and the second clamp pin abuts against the upper half portion of the electrode assembly, reducing the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery.

In some embodiments, the second clamp pin has a first wall surface facing away from a central axis of the winding pin body, and the first wall surface is configured as a curved surface.

The technical solution of the embodiments of this application provides that the second clamp pin abuts against the upper half portion of the electrode assembly, and the second clamp pin has the first wall surface facing away from the central axis of the winding pin body. The first wall surface abutting against the upper half portion of the electrode assembly is a curved surface. Since the wound electrode assembly is annular, and an inner wall of the wound electrode assembly is a curved surface, configuring the first wall surface as a curved surface enables smoother abutment of the second clamp pin against the upper half portion of the electrode assembly, reducing the risk of damaging the electrode assembly, thereby improving the reliability of the battery.

In some embodiments, the winding apparatus further includes a heating element, and the heating element is connected to the second clamp pin for heating the second clamp pin.

The technical solution of the embodiments of this application provides that the heating element is connected to the second clamp pin for heating the second clamp pin, where the second clamp pin is configured to abut against the upper half portion of the electrode assembly. The upper half portion includes a positive electrode plate, a negative electrode plate, and an isolating film for bonding the positive and negative electrode plates. Heating the second clamp pin causes the adhesive in the isolating film in the upper half portion to melt, thereby strengthening the bonding between the isolating film and the positive and negative electrode plates, reducing the risk of wrinkling of the electrode plates, improving the reliability of the electrode assembly, and thus improving the reliability of the battery.

In some embodiments, the heating element is a resistive element.

The technical solution of the embodiments of this application provides that the heating element is configured as a resistive element, which is easy to obtain and facilitates achieving a heating effect, improving the convenience of heating.

In some embodiments, the winding apparatus further includes a first driving member and a second driving member, the first driving member is connected to the pair of first clamp pins for driving the pair of first clamp pins to move away from each other along a first direction, and the second driving member is connected to the second clamp pin for driving the second clamp pin to move along a second direction, where the first direction and the second direction intersect.

The technical solution of the embodiments of this application provides that the first driving member is connected to the first clamp pins for driving the pair of first clamp pins to move away from each other along the first direction, and the second driving member drives the second clamp pin to move downward along the second direction. This enables the two first clamp pins to move away from each other along the first direction and then abut against two opposing inner walls of the electrode assembly in the first direction to stretch the electrode assembly along the first direction. The second clamp pin moves downward along the second direction, and then abuts against the upper half portion of the electrode assembly during movement. This reduces the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery. Additionally, mechanical driving facilitates control of the speed of the first clamp pins and the second clamp pin, improving operational convenience.

According to a third aspect, the embodiments of this application further provide a battery manufacturing device, including the winding apparatus according to any one of the embodiments of the second aspect.

The technical solution of the embodiments of this application provides that the winding apparatus completes the winding and forming of the electrode assembly, and the battery manufacturing device manufactures the battery or battery cell. The winding apparatus includes the winding pin, the first clamp pins, and the second clamp pin. The first clamp pins are disposed in the first grooves of the winding pin, respectively, and the second clamp pin is disposed in the second groove of the winding pin. After the winding pin winds and forms the electrode assembly and is withdrawn, the two first clamp pins move away from each other in a horizontal direction, and then abut against two opposing inner walls of the electrode assembly in the horizontal direction to stretch the electrode assembly along the horizontal direction. At this time, the two opposing inner walls of the electrode assembly in the vertical direction approach each other, and the second clamp pin abuts against the upper half portion of the electrode assembly. This reduces the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery.

According to a fourth aspect, the embodiments of this application further provide a winding method, including: providing the winding pin according to any one of the embodiments of the first aspect; winding electrode plates and an isolating film with the winding pin to form an electrode assembly; inserting a pair of first clamp pins into the pair of first grooves and inserting a second clamp pin into the second groove; withdrawing the winding pin from the electrode assembly; moving the pair of first clamp pins away from each other to stretch the electrode assembly; and in a process of stretching the electrode assembly, supporting an upper half portion of the electrode assembly with the second clamp pin.

The technical solution of the embodiments of this application provides that the provided winding pin winds and forms the positive and negative electrode plates and the isolating film to form the electrode assembly. The first clamp pins are inserted into the first grooves of the winding pin, and the second clamp pin is inserted into the second groove of the winding pin, forming the winding apparatus. The winding pin is then withdrawn from the electrode assembly, allowing the first clamp pins and the second clamp pin to move. The pair of first clamp pins are moved away from each other, and then abut against two opposing inner walls of the electrode assembly to stretch the electrode assembly. Simultaneously, the second clamp pin supports the upper half portion of the electrode assembly, reducing the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery.

In some embodiments, the supporting an upper half portion of the electrode assembly with the second clamp pin is performed such that a moving speed of a region of the upper half portion in contact with the second clamp pin is less than or equal to a moving speed of a region of a lower half portion of the electrode assembly directly facing the second clamp pin.

The technical solution of the embodiments of this application provides that the second clamp pin supports the upper half portion of the electrode assembly, reducing the descending speed of the upper half portion, such that the moving speed of the region of the upper half portion in contact with the second clamp pin is less than or equal to the moving speed of the region of the lower half portion of the electrode assembly directly facing the second clamp pin. By comparing the speeds, it is confirmed that the second clamp pin reduces the risk of collapse in the upper half portion due to excessive descent of the upper half portion caused by gravity, which could lead to wrinkling, and also reduces the probability of tab folding when tabs are located in the upper half portion, thereby reducing the risk of lithium precipitation in the electrode assembly, improving the reliability of the battery cell, and thus improving the reliability of the battery.

For additional aspects and advantages of this application, some will be given in the following description, and some will become apparent in the following description or will be understood in the practice of this application.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is a schematic structural diagram of a battery cell according to some embodiments of this application;
FIG. 4 is a schematic structural diagram of a battery assembly according to some embodiments of this application.
FIG. 5 is a schematic structural diagram of a winding bin according to some embodiments of this application;
FIG. 6 is a schematic structural diagram of the winding pin in FIG. 5 from another perspective;
FIG. 7 is a schematic structural diagram of a winding bin according to some other embodiments of this application;
FIG. 8 is a schematic structural diagram of the winding pin in FIG. 7 from another perspective;
FIG. 9 is a schematic structural diagram of a winding bin according to still some other embodiments of this application;
FIG. 10 is a schematic structural diagram of the winding pin in FIG. 9 from another perspective;
FIG. 11 is a schematic structural diagram of a winding apparatus according to some embodiments of this application;
FIG. 12 is a schematic structural diagram of the winding apparatus in FIG. 11 from another perspective;
FIGs. 13 to 17 are schematic diagrams of processes of a winding method according to this application;
FIG. 18 is a schematic structural diagram of a first driving member and a second driving member of the winding apparatus in FIG. 11; and
FIG. 19 is a flowchart of a winding method according to some embodiments of this application.

Reference signs: 1: winding pin; 2: winding pin body; 3: first groove; 4: second groove; 5: first region; 6: second region; 7: first plane; 8: first winding pin portion; 9: second winding pin portion; 10: winding apparatus; 11: first clamp pin; 12: second clamp pin; 13: first wall surface; 14: heating element; 15: first driving member; 16: second driving member; 100: electrode assembly; 110: positive electrode plate; 120: negative electrode plate; 130: isolating film; 200: battery cell; 210: housing; 211: shell; 212: end cover; 220: electrode terminal; 300: battery; 310: box; 311: first sub-box; 312: second sub-box; 1000: vehicle; 1100: controller; 1200: motor; X: first direction; and Y: second direction.

### DESCRIPTION OF EMBODIMENTS

To make the objectives, technical solutions, and advantages of some embodiments of this application clearer, the following clearly and completely describes the technical solutions in some embodiments of this application with reference to the accompanying drawings in some embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons of ordinary skill in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In this application, "a plurality of" means more than two (inclusive). Similarly, "a plurality of groups" means more than two (inclusive) groups, and "a plurality of pieces" means more than two (inclusive) pieces.

In some embodiments, the battery can be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage electric cabinet, and the like.

In the embodiments of this application, the battery cell may be a secondary battery, and the secondary battery refers to a battery cell that can be recharged to activate active materials for continuous use after the battery cell is discharged.

The battery cell may be, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery.

In an example, the battery cell may be a cylindrical battery cell, a prismatic battery cell, a pouch battery cell, or a battery cell of another shape. The prismatic battery cell includes a square shell battery cell.

The battery cell typically includes an electrode assembly. The electrode assembly includes a positive electrode, a negative electrode, and a separator. During charge and discharge of the battery cell, active ions (such as lithium ions) intercalate and deintercalate back and forth between the positive electrode and the negative electrode. The separator is arranged between the positive electrode and the negative electrode to prevent short circuit of the positive electrode and negative electrode and to allow the active ions to pass through.

In some embodiments, the positive electrode may be a positive electrode plate, and the positive electrode plate may include a positive electrode current collector and a positive electrode active material arranged on at least one surface of the positive electrode current collector.

In an example, the positive electrode current collector includes two back-to-back surfaces in a thickness direction of the positive electrode current collector, and the positive electrode active material is arranged on either or both of the two back-to-back surfaces of the positive electrode current collector.

In an example, the positive electrode current collector may be a metal foil or a composite current collector. For example, as the metal foil, the positive electrode current collector may use aluminum with a silver-plated surface, stainless steel with a silver-plated surface, stainless steel, copper, aluminum, nickel, baked carbon, carbon, nickel, or titanium. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to such materials, and may alternatively use other conventional materials that can be used as positive electrode active materials for batteries.

In some embodiments, the negative electrode may be a negative electrode plate, and the negative electrode plate may include a negative electrode current collector.

In an example, the negative electrode current collector may be a metal foil current collector or a composite current collector. For example, as the metal foil, the negative electrode current collector may use aluminum with a silver-plated surface, stainless steel with a silver-plated surface, stainless steel, copper, aluminum, nickel, baked carbon, carbon, nickel, or titanium.

In some embodiments, the negative electrode current collector includes two back-to-back surfaces in its thickness direction, and the negative electrode active material is disposed on either or both of the two back-to-back surfaces of the negative electrode current collector.

In an example, the negative electrode active material may be a negative electrode active material for batteries well-known in the art. In an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, and may alternatively use other conventional materials that can be used as negative electrode active materials for batteries. One of these negative electrode active materials may be used alone, or two or more of them may be used in combination.

In some embodiments, the separator is an isolating film. The isolating film is not limited to any particular type in this application and may be any well-known porous isolating film with good chemical stability and mechanical stability.

In an example, major materials of the isolating film may be selected from at least one of glass fiber, nonwoven fabric, polyethylene, polypropylene, polyvinylidene fluoride, or ceramics. The isolating film may be a single-layer film or may be a multi-layer composite film and is not particularly limited. When the isolating film is a multi-layer composite film, all layers may be made of the same or different materials, which is not particularly limited. The separator may be an independent component located between the positive electrode and the negative electrode, or may be attached to surfaces of the positive electrode and the negative electrode.

In some embodiments, the separator is a solid electrolyte. The solid electrolyte is arranged between the positive electrode and the negative electrode, and plays the roles of transporting ions and isolating the positive electrode and the negative electrode.

In some embodiments, the electrode assembly is a wound structure. The positive electrode plate and the negative electrode plate are wound into a wound structure.

Currently, from the perspective of market development, battery cells have been widely used in many fields such as electric transportation tools including electric bicycles, electric motorcycles, and electric vehicles, electric tools, unmanned aerial vehicles, and energy storage devices. With the continuous expansion of application fields of batteries, market demands for traction batteries are also increasing.

For the development of battery technologies, many design factors need to be considered, for example, performance parameters such as energy density, cycle life, discharge capacity, and charge and discharge rate. Additionally, with changes in environmental conditions and/or internal battery conditions, the reliability of batteries has also become one of the key factors to be prioritized.

Currently, an electrode assembly is typically wound and formed with a winding pin, and a winding pin body of the winding pin is provided with grooves for accommodating clamp pins. After winding and forming, two clamp pins are accommodated in the grooves, respectively, and the winding pin is withdrawn from the electrode assembly. The two clamp pins are moved away from each other along a horizontal direction to stretch the wound electrode assembly.

During the stretching process, the electrode assembly is stretched in the horizontal direction, and correspondingly, an upper half portion and a lower half portion of the electrode assembly in the vertical direction approach each other, resulting in a tendency for the upper half portion of the electrode assembly to descend and the lower half portion to ascend. However, due to gravity, the upper half portion of the electrode assembly often descends at a faster speed, which can easily lead to direct collapse of the upper half portion of the electrode assembly, causing wrinkling of the upper half portion of the electrode assembly. When tabs are located in the upper half portion, the tabs may also fold due to the collapse of the upper half portion of the electrode assembly, potentially leading to a risk of lithium precipitation during subsequent charge and discharge processes, affecting the reliability of the battery cell and thus the reliability of the battery.

Based on the above considerations, to reduce the risk of wrinkling due to collapse of the upper half portion or tab folding during the stretching process of the electrode assembly, which leads to poor reliability of the battery cell and the battery, the embodiments of this application provide a winding pin, including a winding pin body. An outer peripheral surface of the winding pin body is provided with a pair of first grooves and a second groove, the pair of first grooves are spaced apart along a circumferential direction of the winding pin body, and the second groove is spaced apart from the first grooves along the circumferential direction of the winding pin body. The first groove is configured to accommodate a first clamp pin, and the second groove is configured to accommodate a second clamp pin.

By providing the first grooves and the second groove, the first grooves accommodate the first clamp pins, and the second groove accommodates the second clamp pin. During the stretching process of the electrode assembly, the second clamp pin, whose position is determined by the second groove, abuts against the upper half portion of the electrode assembly. This reduces the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly, improving the reliability of the battery cell, and thus improving the reliability of the battery.

The battery disclosed in the embodiments of this application may be used without limitation in electric devices such as vehicles, ships, or aircrafts. The battery disclosed in this application may be used to constitute a power supply system of that electric device.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

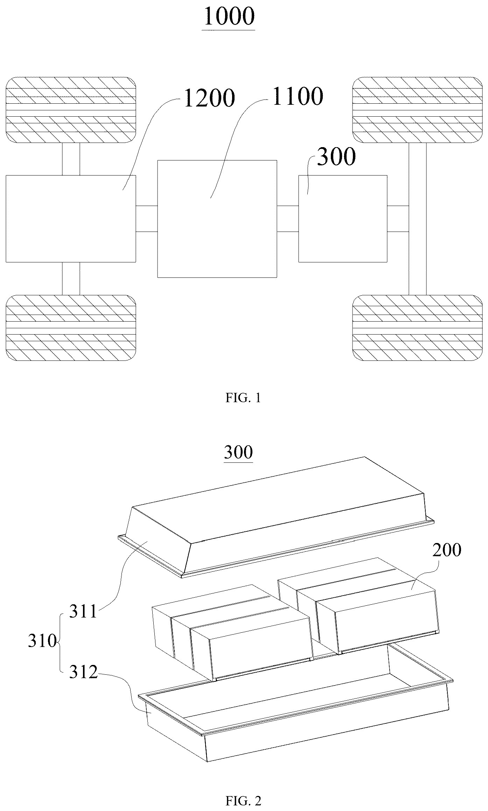

Referring to FIG. 1, FIG. 1 is a schematic structural diagram of a vehicle 1000 according to some embodiments of the present application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 300 inside, where the battery 300 may be arranged at the bottom, front, or rear of the vehicle 1000. The battery 300 may be configured to supply power to the vehicle 1000. For example, the battery 300 may be used as an operational power source for the vehicle 1000 for use in a circuit system of the vehicle 1000, for example, to meet power needs of start, navigation, and running of the vehicle 1000.

The vehicle 1000 may further include a controller 1100 and a motor 1200, where the controller 1100 is configured to control the battery 300 to supply power to the motor 1200, for example, to meet power needs of start, navigation, and driving of the vehicle 1000.

In some embodiments of the present application, the battery 300 may be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 300 according to some embodiments of this application. The battery 300 may further include a box 310, and battery cells 200 are accommodated in the box 310. The box 310 is configured to provide an accommodating space for the battery cell 200. The box 310 may be a variety of structures. In some embodiments, the box 310 may include a first sub-box 311 and a second sub-box 312. The first sub-box 311 and the second sub-box 312 fit together to jointly define an accommodating space for accommodating the battery cell 200. The second sub-box 312 may be a hollow structure with an opening at one end, the first sub-box 311 may be a plate structure, and the first sub-box 311 covers an opening side of the second sub-box 312, such that the first sub-box 311 and the second sub-box 312 jointly define an accommodating space. The first sub-box 311 and the second sub-box 312 may both be a hollow structure with an opening on one side, and the opening side of the first sub-box 311 covers the opening side of the second sub-box 312.

In the battery 300, the battery cell 200 may be provided in plurality, and the plurality of battery cells 200 may be connected in series, parallel, or series-parallel, where being connected in series-parallel means a combination of series and parallel connections of the plurality of battery cells 200. The plurality of battery cells 200 may be directly connected in series, parallel, or series-parallel, and an entirety constituted by the plurality of battery cells 200 is accommodated in the box 310. Certainly, the battery 300 may alternatively be formed by connecting a plurality of battery cells 200 in series, parallel, or series-parallel first to constitute a battery 300 module, then connecting a plurality of battery 300 modules in series, parallel, or series-parallel to constitute an entirety, and accommodating the entirety in the box 310. The battery 300 may further include other structures. For example, the battery 300 may further include a busbar configured to implement electrical connection between the plurality of battery cells 200.

The battery cell 200 may be a secondary battery 300 or a primary battery 300, and battery cell 200 may alternatively be a lithium-sulfur battery 300, a sodium-ion battery 300, or a magnesium-ion battery 300, but is not limited thereto.

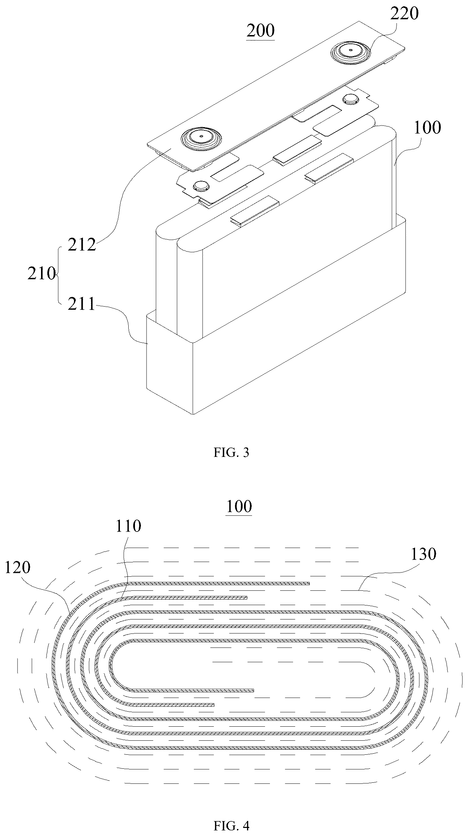

Referring to FIG. 3, FIG. 3 is an exploded view of a battery cell 200 according to some embodiments of this application. As shown in FIG. 3, the battery cell 200 includes a housing 210, an electrode assembly 100, and an electrode terminal 220. The housing 210 includes a shell 211 and an end cover 212, where the shell 211 has an opening, and the end cover 212 closes the opening to separate the internal environment of the battery cell 200 from the external environment.

The shell 211 is an assembly configured to form an internal environment of the battery cell 200 together with the end cover 212, where the formed internal environment may be configured to accommodate the electrode assembly 100, an electrolyte, and other components. The shell 211 and the end cover 212 may be independent components. The shell 211 may be of various shapes and sizes. Specifically, a shape of the shell 211 may be determined according to a specific shape and size of the electrode assembly 100. The shell 211 can be made of various materials, such as copper, iron, aluminum, stainless steel, aluminum alloy, and plastic.

The end cover 212 refers to a component that covers an opening of the shell 211 to separate an internal environment of the battery cell 200 from an external environment. Without limitation, a shape of the end cover 212 may be adapted to a shape of the shell 211 so that the end cover 212 fits with the shell 211. Optionally, the end cover 212 may be made of a material (for example, aluminum alloy) with specified hardness and strength, such that the end cover 212 is less likely to deform under extrusion and collision, allowing the battery cell 200 to have a higher structural strength and improved reliability. The end cover 212 may be provided with functional components such as an electrode terminal. The electrode terminal may be configured to be electrically connected to the electrode assembly 100 for outputting or inputting electrical energy of the battery cell 200. The end cover 212 may alternatively be made of various materials, such as copper, iron, aluminum, stainless steel, aluminum alloy, and plastic, which are not particularly limited in the embodiments of this application. In some embodiments, an insulating structure may also be provided inside the end cover 212, and the insulating structure may be configured to isolate an electrical connection component in the shell 211 from the end cover 212 so as to reduce the risk of short circuit. Illustratively, the insulating structure may be plastic, rubber, or the like.

Referring to FIG. 4, FIG. 4 is a schematic structural diagram of an electrode assembly according to some embodiments of this application. As shown in the figure, the electrode assembly 100 is a component in the battery cell 200 in which electrochemical reactions take place. The shell 211 may include one or more electrode assemblies 100. The electrode assembly 100 is mainly formed by winding or stacking a positive electrode plate 110 and a negative electrode plate 120, and an isolating film 130 is typically arranged between the positive electrode plate 110 and the negative electrode plate 120. The isolating film 130 is configured to separate the positive electrode plate 110 and the negative electrode plate 120, so as to reduce the risk of internal short circuit between the positive electrode plate 110 and the negative electrode plate 120. Parts of the positive electrode plate 110 and the negative electrode plate 120 that contain active substances constitute a body portion of the electrode assembly 100, while parts of the positive electrode plate 110 and the negative electrode plate 120 that contain no active substance separately constitute a tab. A positive electrode tab and a negative electrode tab may both be located at one end of the body portion or be located at two ends of the body portion respectively. During charge and discharge of the battery 300, a positive electrode active substance and a negative electrode active substance react with an electrolyte, and the tabs are connected to the electrode terminals to form a current loop.

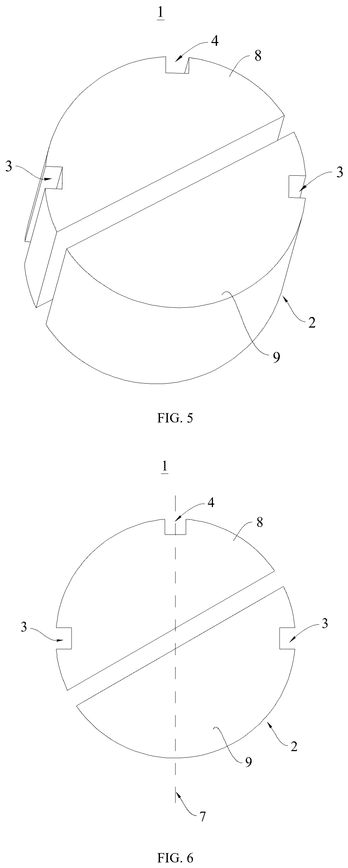

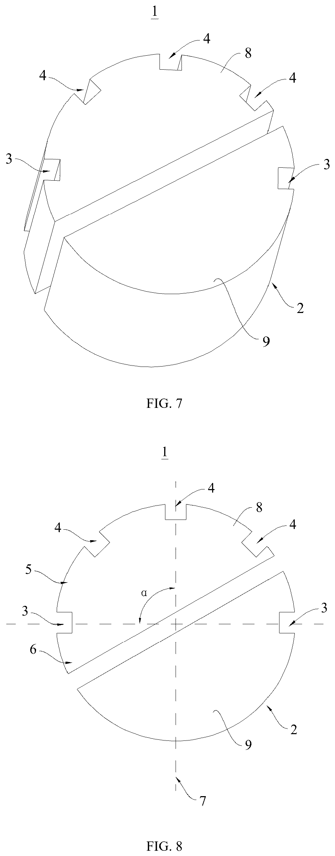

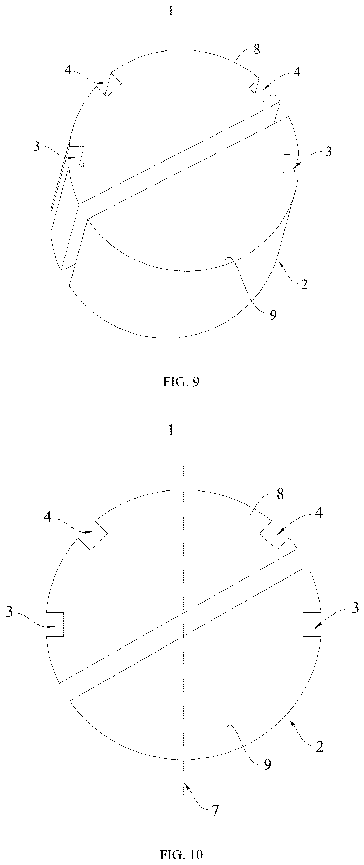

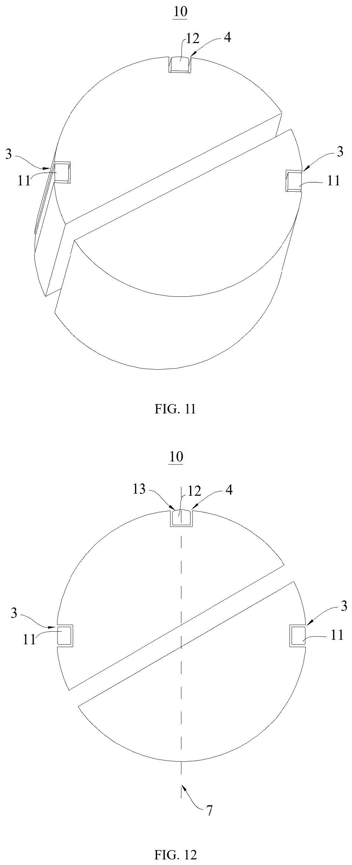

Referring to FIGs. 5 to 11, FIG. 5 is a schematic structural diagram of a winding pin according to some embodiments of this application, FIG. 6 is a schematic structural diagram of the winding pin of FIG. 5 from another perspective, FIG. 7 is a schematic structural diagram of a winding pin according to some other embodiments of this application, FIG. 8 is a schematic structural diagram of the winding pin of FIG. 7 from another perspective, FIG. 9 is a schematic structural diagram of a winding pin according to still some other embodiments of this application, FIG. 10 is a schematic structural diagram of the winding pin of FIG. 9 from another perspective, and FIG. 11 is a schematic structural diagram of a winding apparatus according to some embodiments of this application. As shown in the figures, the embodiments of this application provide a winding pin 1, including a winding pin body 2. An outer peripheral surface of the winding pin body 2 is provided with a pair of first grooves 3, the first groove 3 is configured to accommodate a first clamp pin 11, and the pair of first grooves 3 are spaced apart along a circumferential direction of the winding pin body 2. The outer peripheral surface of the winding pin body 2 is further provided with at least one second groove 4, the second groove 4 is configured to accommodate a second clamp pin 12, and the second groove 4 is spaced apart from the first grooves 3 along the circumferential direction of the winding pin body 2.

In some embodiments, the winding pin 1 is configured to wind and form a positive electrode plate 110, a negative electrode plate 120, and an isolating film 130 into an electrode assembly 100, where the electrode assembly 100 may be wound on the outer peripheral surface of the winding pin body 2.

In some embodiments, the winding pin body 2 may be a rotary body, and the rotary body may be a cylinder. The electrode assembly 100 wound and formed by the winding pin body 2 has a hollow annular cross-section in an axial direction of the winding pin body 2, and the electrode assembly 100 includes an inner ring and an outer ring.

In some embodiments, when the winding pin 1 winds and forms the electrode assembly 100, the winding pin body 2 may be arranged such that the outer peripheral surface of the winding pin body 2 is horizontally disposed, so that the axial direction of the winding pin body 2 is in a horizontal direction. Viewing along the axial direction of the winding pin body 2, the pair of first grooves 3 are located in the horizontal direction, and in the vertical direction, the second groove 4 is located above a line connecting the pair of first grooves 3.

After the electrode assembly 100 is wound and formed on the outer peripheral surface of the winding pin body 2, a pair of first clamp pins 11 are respectively inserted into the pair of first grooves 3, and a second clamp pin 12 is inserted into the second groove 4. After the winding pin body 2 is withdrawn from the electrode assembly 100, the pair of first clamp pins 11 are moved away from each other along the horizontal direction, and then abut against an inner ring of the electrode assembly 100 to stretch the electrode assembly 100 along the horizontal direction.

At the same time, the upper half portion and the lower half portion of the electrode assembly 100 approach each other in the vertical direction, where the upper half portion is a portion of the electrode assembly 100 located above the line connecting the pair of first clamp pins 11 in the vertical direction, and the lower half portion is a portion of the electrode assembly 100 located below the line connecting the pair of first clamp pins 11 in the vertical direction. Due to gravity, a descending speed of the upper half portion of the electrode assembly 100 is greater than an ascending speed of the lower half portion of the electrode assembly 100. The second clamp pin 12 abuts against the upper half portion of the electrode assembly 100 to reduce the descending speed of the upper half portion.

In some embodiments, the second groove 4 may be provided in one.

In some embodiments, the second groove 4 may be provided in plurality.

In some embodiments, the second grooves 4 and the second clamp pins 12 may be provided in a one-to-one correspondence.

The technical solution of the embodiments of this application provides a pair of circumferentially spaced first grooves 3 and a second groove 4 distinct from the first grooves 3 on the outer peripheral surface of the winding pin body 2. During use, the pair of first grooves 3 are disposed on two sides in the vertical direction, and the second groove 4 is disposed above a line connecting the pair of first grooves 3. The electrode assembly 100 is wound and formed on the outer peripheral surface of the winding pin body 2, the first grooves 3 accommodate the first clamp pins 11, and the second groove 4 accommodates the second clamp pin 12, thereby determining positions of the first clamp pins 11 and the second clamp pin 12. In the subsequent stretching process of the electrode assembly 100, the second clamp pin 12, whose position is determined by the second groove 4, abuts against the upper half portion of the electrode assembly 100. This reduces the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300.

Referring to FIGs. 5 to 11. In some embodiments, the pair of first grooves 3 are spaced apart by 180° along the circumferential direction of the winding pin body 2.

In some embodiments, the pair of first grooves 3 may be spaced apart by 180° along the circumferential direction of the winding pin body 2. When arranging the winding pin body 2, the pair of first grooves 3 are located on the same horizontal plane, and the pair of first grooves 3 are located at two ends of the winding pin body 2. The pair of first clamp pins 11 are accommodated in the pair of first grooves 3, respectively, and the first clamp pins 11 move away from each other in the horizontal direction, meaning that the pair of first clamp pins 11 respectively abut against two inner ring wall surfaces of the wound electrode assembly 100, where the two inner ring wall surfaces are two inner ring wall surfaces corresponding to the diameter of the electrode assembly 100 in the horizontal direction.

In some embodiments, the pair of first grooves 3 are spaced apart by 180° along the circumferential direction of the winding pin body 2, meaning that viewing along the axial direction of the winding pin body 2, on a surface in the axial direction of the winding pin body 2, the pair of first grooves 3 can be disposed on the same horizontal plane.

In some embodiments, due to manufacturing errors or other reasons, the angle at which the pair of first grooves 3 are spaced apart along the circumferential direction of the winding pin body 2 may alternatively be between 170° and 180°, for example, 170°, 171°, 172°, 173°, 174°, 175°, 176°, 177°, 178°, 179°, or 180°. When the angle between the pair of first grooves 3 is affected by manufacturing errors, during arrangement of the pair of first grooves 3, viewing along the axial direction of the winding pin body 2, on a surface of the winding pin body 2 in the axial direction, the pair of grooves are set to be symmetrical with respect to the diameter of the electrode assembly 100 in the vertical direction.

The technical solution of the embodiments of this application arranges the pair of first grooves 3 180° apart on the outer peripheral surface of the winding pin body 2, where the electrode assembly 100 is wound and formed on the outer peripheral surface of the winding pin body 2, and the pair of first grooves 3 are disposed on two sides in the vertical direction, meaning that the pair of first grooves 3 are located on a diameter of the electrode assembly 100 in the horizontal direction. The first groove 3 is configured to accommodate the first clamp pin 11. In the subsequent stretching process of the electrode assembly 100, the first clamp pins 11 move away from each other along the horizontal direction, enabling the best stretching effect for the electrode assembly 100 and facilitating the arrangement of the second groove 4, thereby improving the convenience.

Referring to FIGs. 5 to 11, in some embodiments, in the circumferential direction of the winding pin body 2, an angle between the second groove 4 and one of the first grooves 3 is denoted as α, meeting 45° ≤ α ≤ 90°.

In some embodiments, in the circumferential direction of the winding pin body 2, the angle between the second groove 4 and one of the first grooves 3 may be α, and the angle between the second groove 4 and the other first groove 3 may be 180° - α, where α meets 45° ≤ α ≤ 90°, and α may be 45°, 50°, 55°, 60°, 65°, 70°, 75°, 80°, 85°, 90°, or the like.

In some embodiments, a method for measuring the magnitude of the angle α may be as follows. Viewing along the axial direction of the winding pin body 2, on a surface of the winding pin body 2 in the axial direction, taking one of the first grooves 3 as an example, an extension line of a wall surface of the one first groove 3 facing away from the second groove 4 and an extension line of a wall surface of the second groove 4 facing toward the first groove 3 form an angle α between the two extension lines.

The technical solution of the embodiments of this application provides that the angle between the second groove 4 and one of the first grooves 3 is α. During use, the pair of first grooves 3 are horizontally disposed, and the second groove 4 is disposed above the first grooves 3. The first groove 3 is configured to accommodate the first clamp pin 11, and the second groove 4 is configured to accommodate the second clamp pin 12. The magnitude of α corresponds to the position of the second clamp pin 12 relative to the wound electrode assembly 100. When 45° ≤ α ≤ 90°, the first clamp pin 11 and the second clamp pin 12 are relatively far apart, meaning that the second clamp pin 12 is at a higher position in the vertical direction. The portion where the second clamp pin 12 abuts against the upper half portion is relatively close to the uppermost end of the electrode assembly 100, with a relatively small angular deviation from the uppermost end of the electrode assembly 100. The second clamp pin 12 abuts against the upper half portion of the electrode assembly 100. This reduces the descending speed of the upper half portion of the electrode assembly 100, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300.

In some embodiments, 60° ≤ α ≤ 90°.

In some embodiments, the angle between the second groove 4 and one of the first grooves 3 may be α, and the angle between the second groove 4 and the other first groove 3 may be 180° - α, where α meets 60° ≤ α ≤ 90°, and α may be 60°, 65°, 70°, 75°, 80°, 85°, 90°, or the like.

The technical solution of the embodiments of this application provides that when 60° ≤ α ≤ 90°, to be specific, the first clamp pins 11 and the second clamp pin 12 are farther apart, the second clamp pin 12 is relatively close to the uppermost end of the electrode assembly 100, with a relatively small angular deviation from the uppermost end of the electrode assembly 100. The second clamp pin 12 abuts against the upper half portion of the electrode assembly 100. This reduces the descending speed of the upper half portion of the electrode assembly 100, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300.

In some embodiments, 85° ≤ α ≤ 90°.

In some embodiments, the angle between the second groove 4 and one of the first grooves 3 may be α, and the angle between the second groove 4 and the other first groove 3 may be 180° - α, where α meets 85° ≤ α ≤ 90°, and α may be 85°, 86°, 87°, 88°, 89°, 90°, or the like.

In some embodiments, the second groove 4 may be provided in one, and α may be 90°.

The technical solution of the embodiments of this application provides that when 85° ≤ α ≤ 90°, to be specific, the second clamp pin 12 abuts against the uppermost end of the electrode assembly 100, the second clamp pin 12 deviates from the uppermost end of the electrode assembly 100 due to positioning errors or process reasons. The second clamp pin 12 abuts against the upper half portion of the electrode assembly 100. This reduces the descending speed of the upper half portion of the electrode assembly 100, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300.

Referring to FIG. 8, in some embodiments, the outer peripheral surface of the winding pin body 2 is divided by the pair of first grooves 3 into a first region 5 and a second region 6, the second groove 4 is provided in plurality, and the plurality of second grooves 4 are all disposed in the first region 5.

In some embodiments, there is no particular distinguishing mark between the first region 5 and the second region 6, and the region where the second grooves 4 are disposed may be the first region 5.

In some embodiments, the plurality of second grooves 4 may all be disposed in the second region 6, and no second grooves 4 are disposed in the first region 5.

The technical solution of the embodiments of this application provides that, due to gravity, only the upper half portion of the electrode assembly 100 collapses due to excessive descent of the upper half portion, leading to wrinkling of electrode plates or tabs in the upper half portion, meaning that only the upper half portion of the electrode assembly 100 requires abutting support. The outer peripheral surface of the winding pin body 2 is divided by the pair of first grooves 3 into the first region 5 and the second region 6, and the plurality of second grooves 4 are all disposed in the first region 5. During use, the pair of first grooves 3 are disposed in the horizontal direction, and the second grooves 4 in the first region 5 are disposed above the pair of first grooves 3. The second groove 4 is configured to accommodate the second clamp pin 12, and abuts against the upper half portion of the electrode assembly 100 through the second clamp pin 12. This reduces the descending speed of the upper half portion of the electrode assembly 100, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300. By disposing the second grooves 4 in the first region 5 and disposing the first region 5 above the first grooves 3 during use, the probability of disposing the second clamp pins 12 below the first grooves 3 is reduced, while also saving costs and improving installation convenience.

Referring to FIGs. 5 to 11, in some embodiments, the pair of first grooves 3 are symmetrically disposed with respect to a first plane 7, a central axis of the winding pin body 2 lies on the first plane 7, the second groove 4 is provided in plurality, and the plurality of second grooves 4 are symmetrically disposed with respect to the first plane 7.

Referring to FIGs. 9 and 10, in some embodiments, the second grooves 4 may be provided in an even number, and the outer peripheral surface of the winding pin body 2 is horizontally disposed, so that the axial direction of the winding pin body 2 is in the horizontal direction. Viewing along the axial direction of the winding pin body 2, the pair of first grooves 3 are located in the horizontal direction, symmetrically disposed with respect to the first plane 7, and the even number of second grooves 4 are all located above the pair of first grooves 3, symmetrically disposed with respect to the first plane 7.

Referring to FIGs. 7 and 8, in some embodiments, the second grooves 4 may be provided in an odd number greater than one, and the outer peripheral surface of the winding pin body 2 is horizontally disposed, so that the axial direction of the winding pin body 2 is in the horizontal direction. Viewing along the axial direction of the winding pin body 2, the pair of first grooves 3 are located in the horizontal direction, symmetrically disposed with respect to the first plane 7, the even number of second grooves 4 are all located above the pair of first grooves 3, one second groove 4 may be disposed on the first plane 7, and the remaining even number of second grooves 4 are symmetrically disposed with respect to the first plane 7.

The technical solution of the embodiments of this application provides that the plurality of second grooves 4 are symmetrically disposed with respect to the first plane 7, and the central axis of the winding pin body 2 lies on the first plane 7. During use, the pair of first grooves 3 are disposed in the horizontal direction, and the electrode assembly 100 is wound and formed on the outer peripheral surface of the winding pin body 2. The second grooves 4 are symmetrically disposed with respect to a diameter of the electrode assembly 100 in the vertical direction, and the second clamp pins 12 are accommodated in the second grooves 4, respectively, such that the plurality of second clamp pins 12 respectively abut against portions of the electrode assembly 100 on two sides of the diameter in the vertical direction. This makes the abutting effect of the second clamp pins 12 on the two sides of the diameter of the electrode assembly 100 in the vertical direction symmetrical, reducing the descending speed of the upper half portion of the electrode assembly 100, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300.

Referring to FIGs. 5 to 11, in some embodiments, the first grooves 3 and the second groove 4 both penetrate the winding pin body 2 along an axial direction of the winding pin body 2.

In some embodiments, the first clamp pins 11 may be accommodated in the first grooves 3, respectively, and the second clamp pin 12 may be accommodated in the second groove 4. A length of the first clamp pin 11 may be greater than a length of the first groove 3 in the axial direction of the winding pin body 2, and a length of the second clamp pin 12 may be greater than a length of the second groove 4 in the axial direction of the winding pin body 2.

In some embodiments, the first grooves 3 and the second groove 4 both penetrate the winding pin body 2 along the axial direction of the winding pin body 2. The first clamp pin 11 may be accommodated in the first groove 3, with two ends of the first clamp pin 11 protruding from the first groove 3, or one end of the first clamp pin 11 protruding from the first groove 3 and the other end accommodated in the first groove 3; the second clamp pin 12 may be accommodated in the second groove 4, with two ends of the second clamp pin 12 protruding from the second groove 4, or one end of the second clamp pin 12 protruding from the second groove 4 and the other end accommodated in the second groove 4.

In some embodiments, the first grooves 3 and the second groove 4 may not penetrate the winding pin body 2 along the axial direction of the winding pin body 2. One end of the first clamp pin 11 may abut against a wall surface of the first groove 3 in the axial direction of the winding pin body 2, and the other end protrudes from the first groove 3; one end of the second clamp pin 12 may abut against a wall surface of the second groove 4 in the axial direction of the winding pin body 2, and the other end protrudes from the second groove 4.

The technical solution of the embodiments of this application provides that the first grooves 3 and the second groove 4 extend along the axial direction of the winding pin body 2 and penetrate the winding pin body 2. The first groove 3 is configured to accommodate the first clamp pin 11, and the second groove 4 is configured to accommodate the second clamp pin 12, improving the convenience of installing the first clamp pins 11 and the second clamp pin 12. By determining the positions of the first grooves 3 and the second groove 4, the positions of the first clamp pins 11 and the second clamp pin 12 are determined, improving the accuracy of the installation positions of the first clamp pins 11 and the second clamp pin 12, while also facilitating the withdrawal of the winding pin 1, reducing the risk of interference between the winding pin 1 and the first clamp pins 11 and the second clamp pin 12 during withdrawal.

Referring to FIGs. 5 to 11, in some embodiments, the winding pin body 2 includes a first winding pin portion 8 and a second winding pin portion 9, a gap is defined between the first winding pin portion 8 and the second winding pin portion 9, the second groove 4 and one of the first grooves 3 are disposed on an outer peripheral surface of the first winding pin portion 8, and the other first groove 3 is disposed on an outer peripheral surface of the second winding pin portion 9.

The technical solution of the embodiments of this application provides that the winding pin body 2 includes the first winding pin portion 8 and the second winding pin portion 9, with a gap defined between the first winding pin portion 8 and the second winding pin portion 9. One of the first grooves 3 is disposed on the first winding pin portion 8, and the other first groove 3 is disposed on the second winding pin portion 9. During use of the winding pin 1, a size of the gap can be adjusted by moving the first winding pin portion 8 and the second winding pin portion 9, to adjust the relative positions of the first winding pin portion 8 and the second winding pin portion 9, implementing the fine-tuning in disposing the pair of first grooves 3, and the first grooves 3 accommodate the first clamp pins 11, improving the accuracy of the installation positions of the first clamp pins 11, thereby enhancing the stretching effect of the electrode assembly 100, improving the reliability of the electrode assembly 100, and thus improving the reliability of the battery cell 200 and the battery 300.

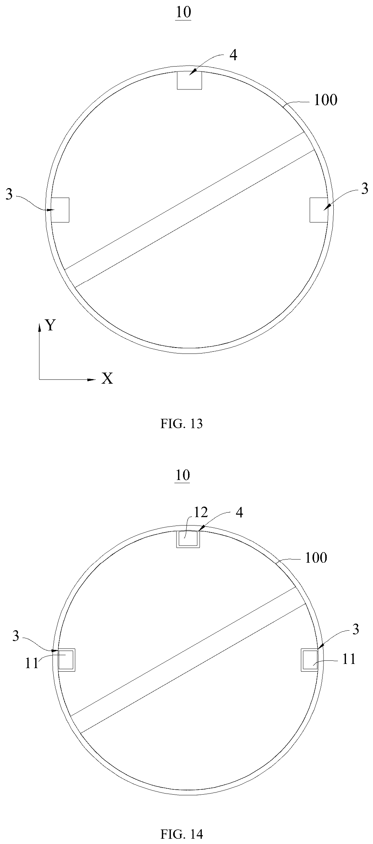

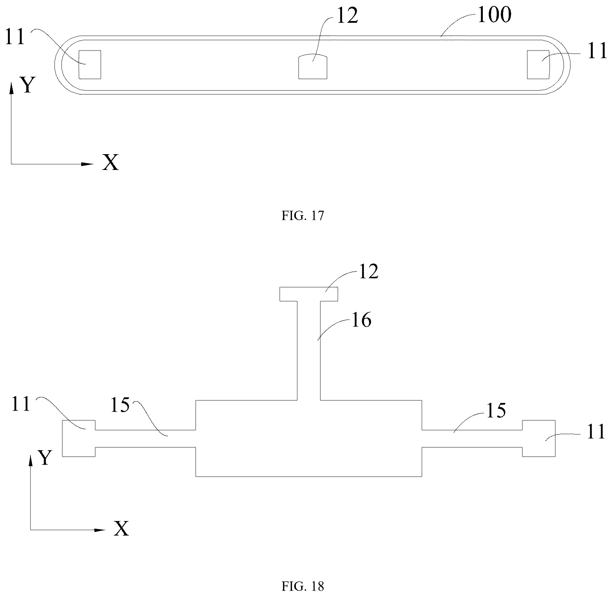

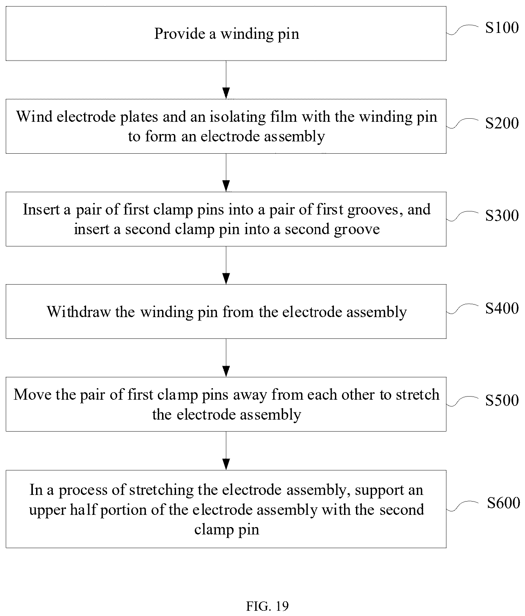

Referring to FIGs. 11 to 18, FIG. 12 is a schematic structural diagram of the winding apparatus of FIG. 11 from another perspective, FIGs. 13 to 17 are schematic diagrams of processes of a winding method according to this application, FIG. 18 is a schematic structural diagram of a first driving member and a second driving member of the winding apparatus of FIG. 11, and FIG. 19 is a flowchart of a winding method according to some embodiments of this application. As shown in the figures, according to a second aspect, this application further provides a winding apparatus 10 for winding and forming an electrode assembly 100, including the winding pin 1 according to any one of the embodiments of the first aspect, a pair of first clamp pins 11, and at least one second clamp pin 12. The pair of first clamp pins 11 are configured to move away from each other after the winding pin 1 is withdrawn from the electrode assembly 100 to stretch the electrode assembly 100, and the second clamp pin 12 is configured to support an upper half portion of the electrode assembly 100 in a process of stretching the electrode assembly 100 by the pair of first clamp pins 11.

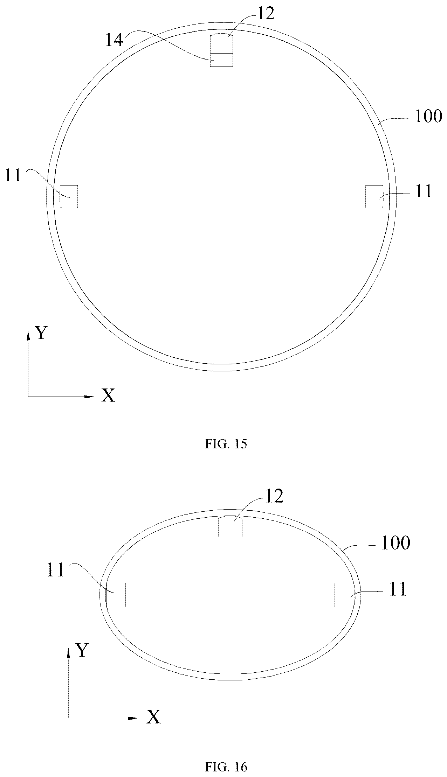

Referring to FIGs. 5 and 6, in some embodiments, the winding pin 1 includes a winding pin body 2, and on an outer peripheral surface of the winding pin body 2, a pair of first grooves 3 may be spaced apart by 180° along a circumferential direction of the winding pin body 2, and a second groove 4 is also provided on the outer peripheral surface. Referring to FIG. 13, the electrode assembly 100 is wound and formed on the outer peripheral surface of the winding pin body 2. Referring to FIG. 14, a pair of first clamp pins 11 are accommodated in the pair of first grooves 3, respectively, a second clamp pin 12 is accommodated in the second groove 4, and the winding pin 1 is withdrawn from the electrode assembly 100. Viewing along an axial direction of the winding pin body 2, the pair of first clamp pins 11 are located in the same horizontal direction, and the second clamp pin 12 is located above the first clamp pins 11 and on a first plane 7. Referring to FIGs. 15 to 17, the pair of first clamp pins 11 are moved away from each other in a horizontal direction, the pair of first clamp pins 11 respectively abut against inner ring portions corresponding to the inner diameter of the electrode assembly 100 in the horizontal direction to stretch the electrode assembly 100 along the horizontal direction, and the second clamp pin 12 abuts against an inner ring portion corresponding to the inner diameter of the electrode assembly 100 in the vertical direction to support an upper half portion of the electrode assembly 100, so as to reduce the descending speed of the upper half portion during the stretching process.

The technical solution of the embodiments of this application provides that the first clamp pins 11 are disposed in the first grooves 3, respectively, and the second clamp pin 12 is disposed in the second groove 4. After the winding pin 1 winds and forms the electrode assembly 100 and is withdrawn, the two first clamp pins 11 move away from each other in the horizontal direction, and then abut against two opposing inner walls of the electrode assembly 100 in the horizontal direction to stretch the electrode assembly 100 along the horizontal direction. At this time, the two opposing inner walls of the electrode assembly 100 in the vertical direction approach each other, and the second clamp pin 12 abuts against the upper half portion of the electrode assembly 100, reducing the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300.

Referring to FIG. 13, in some embodiments, the second clamp pin 12 has a first wall surface 13 facing away from a central axis of the winding pin body 2, and the first wall surface 13 is configured as a curved surface.

In some embodiments, when the second clamp pin 12 is accommodated in the second groove 4, a wall surface facing away from a central axis of the winding pin body 2 is the first wall surface 13, where the first wall surface 13 may be a curved surface, and the curved surface may protrude away from the central axis of the winding pin body 2.

The technical solution of the embodiments of this application provides that the second clamp pin 12 abuts against the upper half portion of the electrode assembly 100, and the second clamp pin 12 has the first wall surface 13 facing away from the central axis of the winding pin body 2. The first wall surface 13 abutting against the upper half portion of the electrode assembly 100 is a curved surface. Since the wound electrode assembly 100 is annular, and an inner wall of the wound electrode assembly 100 is a curved surface, configuring the first wall surface 13 as a curved surface enables smoother abutment of the second clamp pin 12 against the upper half portion of the electrode assembly 100, reducing the risk of damaging the electrode assembly 100, thereby improving the reliability of the battery 300.

Referring to FIG. 15, in some embodiments, the winding apparatus 10 further includes a heating element 14, and the heating element 14 is connected to the second clamp pin 12 for heating the second clamp pin 12.

In some embodiments, the heating element 14 may be in direct contact with the second clamp pin 12 so as to achieve heat conduction.

In some embodiments, the heating element 14 may not be in direct contact with the second clamp pin 12, provided that a thermally conductive connection capable of heat exchange is formed.

The technical solution of the embodiments of this application provides that the heating element 14 is connected to the second clamp pin 12 for heating the second clamp pin 12, where the second clamp pin 12 is configured to abut against the upper half portion of the electrode assembly 100. The upper half portion includes a positive electrode plate, a negative electrode plate, and an isolating film 130 for bonding the positive and negative electrode plates. Heating the second clamp pin 12 causes the adhesive in the isolating film 130 in the upper half portion to melt, thereby strengthening the bonding between the isolating film 130 and the positive and negative electrode plates, reducing the risk of wrinkling of the electrode plates, improving the reliability of the electrode assembly 100, and thus improving the reliability of the battery 300.

In some embodiments, the heating element 14 is a resistive element.

The technical solution of the embodiments of this application provides that the heating element 14 is configured as a resistive element, which is easy to obtain and facilitates achieving a heating effect, improving the convenience of heating.

Referring to FIG. 18, in some embodiments, the winding apparatus 10 further includes a first driving member 15 and a second driving member 16, the first driving member 15 is connected to the pair of first clamp pins 11 for driving the pair of first clamp pins 11 to move away from each other along a first direction X, and the second driving member 16 is connected to the second clamp pin 12 for driving the second clamp pin 12 to move along a second direction Y, where the first direction X and the second direction Y intersect.

In some embodiments, the first driving member 15 may include two driving arms, the two driving arms are connected to the pair of first clamp pins 11, respectively, and drive the pair of first clamp pins 11 to move away from each other along the first direction X. The second driving member 16 is connected to the second clamp pin 12 for driving the second clamp pin 12 to move along the second direction Y. It should be noted that, viewing along the axial direction of the winding pin body 2, the first direction X may be the horizontal direction, and the second direction Y may be the vertical direction. To be specific, the first driving member 15 drives the pair of first clamp pins 11 to move away from each other along the horizontal direction, and the second driving member 16 drives the second clamp pin 12 to move downward along the vertical direction until the pair of first clamp pins 11 and the second clamp pin 12 are at the same horizontal level.

As shown, the first direction X may be denoted as X, and the second direction Y may be denoted as Y.

The technical solution of the embodiments of this application provides that the first driving member 15 is connected to the first clamp pins 11 for driving the pair of first clamp pins 11 to move away from each other along the first direction X, and the second driving member 16 drives the second clamp pin 12 to move downward along the second direction Y. This enables the two first clamp pins 11 to move away from each other along the first direction X and then abut against two opposing inner walls of the electrode assembly 100 in the first direction X to stretch the electrode assembly 100 along the first direction X. The second clamp pin 12 moves downward along the second direction Y, and then abuts against the upper half portion of the electrode assembly 100 during movement. This reduces the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300. Additionally, mechanical driving facilitates control of the speed of the first clamp pins 11 and the second clamp pin 12, improving operational convenience.

According to a third aspect, the embodiments of this application further provide a battery 300 manufacturing device, including the winding apparatus 10 according to any one of the embodiments of the second aspect.

The technical solution of the embodiments of this application provides that the winding apparatus 10 completes the winding and forming of the electrode assembly 100, and the battery manufacturing device manufactures the battery 300 or battery cell 200. The winding apparatus 10 includes the winding pin 1, the first clamp pins 11, and the second clamp pin 12. The first clamp pins 11 are disposed in the first grooves 3 of the winding pin 1, respectively, and the second clamp pin 12 is disposed in the second groove 4 of the winding pin 1. After the winding pin 1 winds and forms the electrode assembly 100 and is withdrawn, the two first clamp pins 11 move away from each other in a horizontal direction, and then abut against two opposing inner walls of the electrode assembly 100 in the horizontal direction to stretch the electrode assembly 100 along the horizontal direction. At this time, the two opposing inner walls of the electrode assembly 100 in the vertical direction approach each other, and the second clamp pin 12 abuts against the upper half portion of the electrode assembly 100. This reduces the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300.

Referring to FIGs. 5 to 19, FIG. 19 is a flowchart of a winding method according to some embodiments of this application. As shown, according to a fourth aspect, the embodiments of this application further provide a winding method, including: S100, providing the winding pin 1 according to any one of the embodiments of the first aspect; referring to FIG. 13, S200, winding electrode plates and an isolating film 130 with the winding pin 1 to form an electrode assembly 100; referring to FIG. 14, S300, inserting a pair of first clamp pins 11 into the pair of first grooves 3, and inserting a second clamp pin 12 into the second groove 4; referring to FIG. 15, S400, withdrawing the winding pin 1 from the electrode assembly 100; referring to FIGs. 16 and 17, S500, moving the pair of first clamp pins 11 away from each other to stretch the electrode assembly 100; and S600, in a process of stretching the electrode assembly 100, supporting an upper half portion of the electrode assembly 100 with the second clamp pin 12.

The technical solution of the embodiments of this application provides that the provided winding pin 1 winds and forms the positive and negative electrode plates and the isolating film 130 to form the electrode assembly 100. The first clamp pins 11 are inserted into the first grooves 3 of the winding pin 1, and the second clamp pin 12 is inserted into the second groove 4 of the winding pin 1, forming the winding apparatus 10. The winding pin 1 is then withdrawn from the electrode assembly 100, allowing the first clamp pins 11 and the second clamp pin 12 to move. At this point, the pair of first clamp pins 11 are moved away from each other, and then abut against two opposing inner walls of the electrode assembly 100 while stretching the electrode assembly 100, so as to achieve stretching of the electrode assembly 100. Simultaneously, the second clamp pin 12 supports the upper half portion of the electrode assembly 100. This reduces the descending speed of the upper half portion, thereby reducing the risk of collapse in the upper half portion due to excessive descent of the upper half portion caused by gravity, which could lead to wrinkling. This also reduces the probability of tab folding when tabs are located in the upper half portion, thereby reducing the risk of lithium precipitation in the electrode assembly 100, improving the reliability of the battery cell 200, and thus improving the reliability of the battery 300.

In some embodiments, supporting the upper half portion of the electrode assembly 100 with the second clamp pin 12 is performed such that a moving speed of a region of the upper half portion in contact with the second clamp pin 12 is less than or equal to a moving speed of a region of a lower half portion of the electrode assembly 100 directly facing the second clamp pin 12.

The technical solution of the embodiments of this application provides that the second clamp pin 12 supports the upper half portion of the electrode assembly 100, reducing the descending speed of the upper half portion, such that the moving speed of the region of the upper half portion in contact with the second clamp pin 12 is less than or equal to the moving speed of the region of the lower half portion of the electrode assembly 100 directly facing the second clamp pin 12. By comparing the speeds, it is confirmed that the second clamp pin 12 reduces the risk of collapse in the upper half portion due to excessive descent of the upper half portion caused by gravity, which could lead to wrinkling, and also reduces the probability of tab folding when tabs are located in the upper half portion, thereby reducing the risk of lithium precipitation in the electrode assembly 100, improving the reliability of the battery cell 200, and thus improving the reliability of the battery 300.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A winding pin, **characterized by** comprising a winding pin body, wherein an outer peripheral surface of the winding pin body is provided with a pair of first grooves, the first groove is configured to accommodate a first clamp pin, and the pair of first grooves are spaced apart along a circumferential direction of the winding pin body; and
the outer peripheral surface of the winding pin body is further provided with at least one second groove, the second groove is configured to accommodate a second clamp pin, and the second groove is spaced apart from the first grooves along the circumferential direction of the winding pin body.

2. The winding pin according to claim 1, **characterized in that** the pair of first grooves are spaced apart by 180° along the circumferential direction of the winding pin body.

3. The winding pin according to any one of claims 1 or 2, **characterized in that** in the circumferential direction of the winding pin body, an angle between the second groove and one of the first grooves is denoted as α, meeting 45° ≤ α ≤ 90°.

4. The winding pin according to claim 3, **characterized in that** 60° ≤ α ≤ 90°.

5. The winding pin according to any one of claims 3 or 4, **characterized in that** 85° ≤ α ≤ 90°.

6. The winding pin according to any one of claims 1 to 5, **characterized in that** the outer peripheral surface of the winding pin body is divided by the pair of first grooves into a first region and a second region, the second groove is provided in plurality, and the plurality of second grooves are all disposed in the first region.

7. The winding pin according to any one of claims 1 to 6, **characterized in that** the pair of first grooves are symmetrically disposed with respect to a first plane, a central axis of the winding pin body lies on the first plane, the second groove is provided in plurality, and the plurality of second grooves are symmetrically disposed with respect to the first plane.

8. The winding pin according to any one of claims 1 to 7, **characterized in that** the first grooves and the second groove both penetrate the winding pin body along an axial direction of the winding pin body.

9. The winding pin according to any one of claims 1 to 8, **characterized in that** the winding pin body comprises a first winding pin portion and a second winding pin portion, a gap is defined between the first winding pin portion and the second winding pin portion, the second groove and one of the first grooves are disposed on an outer peripheral surface of the first winding pin portion, and the other first groove is disposed on an outer peripheral surface of the second winding pin portion.

10. A winding apparatus for winding and forming an electrode assembly, **characterized by** comprising:
the winding pin according to any one of claims 1 to 9;
a pair of first clamp pins, wherein the pair of first clamp pins are configured to move away from each other after the winding pin is withdrawn from the electrode assembly to stretch the electrode assembly; and
at least one second clamp pin, wherein the second clamp pin is configured to support an upper half portion of the electrode assembly in a process of stretching the electrode assembly by the pair of first clamp pins.

11. The winding apparatus according to claim 10, **characterized in that** the second clamp pin has a first wall surface facing away from a central axis of the winding pin body, and the first wall surface is configured as a curved surface.

12. The winding apparatus according to any one of claims 10 or 11, **characterized in that** the winding apparatus further comprises a heating element, and the heating element is connected to the second clamp pin for heating the second clamp pin.

13. The winding apparatus according to claim 12, **characterized in that** the heating element is a resistive element.

14. The winding apparatus according to any one of claims 10 to 13, **characterized in that** the winding apparatus further comprises a first driving member and a second driving member, the first driving member is connected to the pair of first clamp pins for driving the pair of first clamp pins to move away from each other along a first direction, and the second driving member is connected to the second clamp pin for driving the second clamp pin to move along a second direction, wherein the first direction and the second direction intersect.

15. A battery manufacturing device, **characterized by** comprising the winding apparatus according to any one of claims 10 to 14.

16. A winding method, **characterized by** comprising:
providing the winding pin according to any one of claims 1 to 9;
winding electrode plates and an isolating film with the winding pin to form an electrode assembly;
inserting a pair of first clamp pins into the pair of first grooves, and inserting a second clamp pin into the second groove;
withdrawing the winding pin from the electrode assembly;
moving the pair of first clamp pins away from each other to stretch the electrode assembly; and in a process of stretching the electrode assembly, supporting an upper half portion of the electrode assembly with the second clamp pin.

17. The winding method according to claim 16, **characterized in that** the supporting an upper half portion of the electrode assembly with the second clamp pin is performed such that a moving speed of a region of the upper half portion in contact with the second clamp pin is less than or equal to a moving speed of a region of a lower half portion of the electrode assembly directly facing the second clamp pin.
